(19) Europäisches Patentamt
European Patent Office
Office européen des brevets

(11) EP 4 199 297 A1

(12) EUROPÄISCHE PATENTANMELDUNG

(43) Veröffentlichungstag:
21.06.2023 Patentblatt 2023/25

(21) Anmeldenummer: 21214594.0

(22) Anmeldetag: 15.12.2021

(51) Internationale Patentklassifikation (IPC):
H02J 7/00 (2006.01)          G01D 4/00 (2006.01)
G01F 1/00 (2022.01)          G01R 31/3828 (2019.01)

(52) Gemeinsame Patentklassifikation (CPC):
H02J 7/00; G01R 31/3828

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(71) Anmelder: Landis+Gyr GmbH
90459 Nürnberg (DE)

(72) Erfinder:
• Heinrich, Matthias
90762 Fürth (DE)
• Bär, Siegfried
90425 Nürnberg (DE)

(74) Vertreter: Marks & Clerk LLP
15 Fetter Lane
London EC4A 1BW (GB)

(54) ELEKTRONIKEINRICHTUNG UND VERFAHREN ZUM BETRIEB EINER ELEKTRONIKEINRICHTUNG

(57) Die Elektronikeinrichtung (1) hat eine Elektronikeinheit (2) mit einem Energieanschluss (16) zur Einspeisung der für den Betrieb der Elektronikeinheit (2) benötigten elektrischen Energie und eine Energiespeichereinheit (3), die die Elektronikeinheit (2) mittels eines elektrischen Versorgungsstroms mit der für deren Betrieb benötigten elektrischen Energie versorgt. Ein Pufferkondensator (4) ist am Energieanschluss (16) elektrisch parallel zur Elektronikeinheit (2) geschaltet. Eine Strommessstelle (6) zur Erfassung des elektrischen Versorgungsstroms ist zwischen einem Ausgangsanschluss (11) der Energiespeichereinheit (3) und dem Pufferkondensator (4) angeordnet. Eine Steuer-/Auswerteinheit (8) ist dazu ausgelegt, aus dem erfassten elektrischen Versorgungsstrom eine aus der Energiespeichereinheit entnommene elektrische Ladungsmenge und eine aktuell in der Energiespeichereinheit (3) noch gespeicherte elektrische Restladungsmenge zu ermitteln.

Fig. 2

EP 4 199 297 A1

**Beschreibung**

Die Erfindung betrifft eine Elektronikeinrichtung mit einer Elektronikeinheit mit einem Energieanschluss zur Einspeisung der für den Betrieb der Elektronikeinheit benötigten elektrischen Energie und mit einer Energiespeichereinheit, die die Elektronikeinheit mittels eines elektrischen Versorgungsstroms mit der für deren Betrieb benötigten elektrischen Energie versorgt. Außerdem betrifft die Erfindung ein Verfahren zum Betrieb einer Elektronikeinrichtung, welche eine Elektronikeinheit mit einem Energieanschluss und eine Energiespeichereinheit aufweist, wobei eine für den Betrieb der Elektronikeinheit benötigte elektrische Energie von der Energiespeichereinheit mittels eines elektrischen Versorgungsstroms zur Verfügung gestellt wird.

Derartige Elektronikeinrichtungen und deren Betriebsverfahren sind in verschiedenen Ausführungsformen bekannt. Die meisten derzeit gängigen elektronischen Geräte sind so aufgebaut und werden batterie- oder akkugestützt mit elektrischer Energie versorgt und betrieben. Dabei sind die Batterie und der Akkumulator mögliche Ausgestaltungen der angesprochenen Energiespeichereinheit. Ein Beispiel einer solchen Elektronikeinrichtung ist der Energiezähler gemäß der EP 3 855 147 A1. Die zur Versorgung mit elektrischer Energie vorgesehene Energiespeichereinheit muss von Zeit zu Zeit gewartet werden, wobei je nach Ausführung als Batterie oder als Akku ein Austausch oder eine Aufladung durchgeführt wird. Diese Wartung sollte einerseits, um den Aufwand gering zu halten, nicht zu früh und andererseits, um einen Betriebsausfall des elektronischen Geräts zu vermeiden, nicht zu spät erfolgen. Bisher wird dieser Wartungszeitpunkt z.B. aus einer Abschätzung des Verbrauchs an elektrischer Versorgungsenergie ermittelt.

Da er auf Schätzwerten beruht, ist ein so ermittelter Wartungszeitpunkt nicht besonders genau, so dass die Wartung sicherheitshalber oft zu früh durchgeführt wird.

Eine Aufgabe der Erfindung besteht deshalb darin, eine Elektronikeinrichtung der eingangs bezeichneten Art mit gegenüber dem Stand der Technik verbesserten Eigenschaften anzugeben.

Zur Lösung dieser Aufgabe wird eine Elektronikeinrichtung entsprechend den Merkmalen des Patentanspruchs 1 angegeben. Die erfindungsgemäße Elektronikeinrichtung hat einen Pufferkondensator, der am Energieanschluss elektrisch parallel zur Elektronikeinheit geschaltet ist, eine Strommessstelle zur Erfassung des elektrischen Versorgungsstroms, wobei die Strommessstelle zwischen einem Ausgangsanschluss der Energiespeichereinheit und dem Pufferkondensator angeordnet ist, und eine Steuer-/Auswerteinheit, die dazu ausgelegt ist, aus dem erfassten elektrischen Versorgungsstrom eine aus der Energiespeichereinheit entnommene elektrische Ladungsmenge und eine aktuell in der Energiespeichereinheit noch gespeicherte elektrische Restladungsmenge zu ermitteln.

Die Energiespeichereinheit ist insbesondere als Batterie oder als Akku ausgeführt. Der von ihr zur Energieversorgung der Elektronikeinheit abgegebene elektrische Versorgungsstrom ist insbesondere ein Gleichstrom. Der Energieanschluss der Elektronikeinheit, an dem die elektrische Versorgungenergie eingespeist wird, kann ein externer Anschluss, aber auch ein interner Anschluss ohne Zugänglichkeit von außen sein. Der Begriff "Energieanschluss" ist insofern allgemein zu verstehen. Darüber hinaus kann die Elektronikeinheit allgemein als Verbraucher verstanden werden, für dessen Betrieb elektrische Energie erforderlich ist.

Die insbesondere an die Strommessstelle angeschlossene Steuer-/Auswerteinheit kann vorzugsweise ein (z. B. integraler) Bestandteil der Elektronikeinheit sein. Dadurch ergibt sich ein besonders einfacher und kostengünstiger Aufbau, der zugleich eine hohe Effizienz aufweist.

Es wurde erkannt, dass die insbesondere interessierende verbleibende Verfügbarkeitszeitspanne der Energiespeichereinheit, bei einer Batterie deren Restlebensdauer und bei einem Akku dessen verbleibende Zeitspanne bis zu einer notwendigen Nachladung, sehr viel genauer bestimmt werden kann, wenn keine Abschätzung zugrunde gelegt, sondern Messwerte des tatsächlich von der Energiespeichereinheit abgegebenen elektrischen Versorgungsstroms. Aus der anhand dieser Strommesswerte ermittelten aktuell in der Energiespeichereinheit noch gespeicherten elektrischen Restladungsmenge lässt sich insbesondere die verbleibende Verfügbarkeitszeitspanne der Energiespeichereinheit, also insbesondere die verbleibende Zeitdauer bis zu dem Zeitpunkt, ab dem in der Energiespeichereinheit nicht mehr ausreichend elektrische Energie zur Versorgung der Elektronikeinheit zur Verfügung stehen wird, bestimmen. Diese Bestimmung ist dabei vorzugsweise eine Berechnung, zu deren Durchführung die Steuer-/Auswerteinheit insbesondere ebenfalls ausgelegt ist und im Rahmen derer z.B. die ermittelte aktuell in der Energiespeichereinheit noch gespeicherte elektrische Restladungsmenge durch einen typischen Wert des Versorgungsstroms, beispielsweise einen Versorgungsstrommittelwert oder einen Versorgungsstromerfahrungswert, dividiert wird. Diese insbesondere auf Messungen und Berechnungen beruhende Bestimmung der verbleibenden Verfügbarkeitszeitspanne ist erheblich genauer als die bei bekannten Lösungen vorgesehenen Abschätzungen.

Die Steuer-/Auswerteinheit ist insbesondere dazu ausgelegt, die aktuelle Restladungsmenge $Q_R(t)$ über eine Auswertung, vorzugsweise eine digitale Auswertung, der Formelbeziehung:

$$Q_R(t) = Q_0 - Q_E(t) = Q_0 - \int_{t_0}^{t} I_V(t)dt \qquad (1)$$

zu bestimmen, wobei Qo eine insbesondere in der Steuer-/Auswerteinheit hinterlegte Anfangsladungsmenge der Energiespeichereinheit, $Q_E(t)$ die bislang entnommene Ladungsmenge, t der aktuelle Zeitpunkt, to der Anfangszeitpunkt, ab dem die Energieabgabe aus der Energiespeichereinheit erfolgt ist, und Iv(t) der elektrische Versorgungsstrom zum jeweiligen Zeitpunkt t ist. Der erfasste elektrische Versorgungsstrom Iv(t) geht somit insbesondere in die Bestimmung der aus der Energiespeichereinheit entnommenen elektrischen Ladungsmenge $Q_E(t)$ ein, welche dann ihrerseits zur Bestimmung der verbleibenden Restladungsmenge $Q_R(t)$ der Energiespeichereinheit herangezogen wird.

Weiterhin ist die Steuer-/Auswerteinheit insbesondere dazu ausgelegt, aus der ermittelten aktuell in der Energiespeichereinheit noch gespeicherten elektrischen Restladungsmenge $Q_R(t)$ eine verbleibende Verfügbarkeitszeitspanne der Energiespeichereinheit zu bestimmen, vorzugsweise zur Anzeige zu bringen, und/oder insbesondere an eine andere Einheit oder Einrichtung zur weiteren Verwertung dieser Information zu übertragen.

Der Pufferkondensator dient der Zwischenspeicherung der elektrischen Energie, mit der die Energiespeichereinheit die Elektronikeinheit versorgt. Lastspitzen der Elektronikeinheit mit kurzzeitigem hohen Energiebedarf werden durch die im Pufferkondensator zwischengespeicherte Energie abgedeckt. Die im Pufferkondensator zwischengespeicherte Energie wird der Elektronikeinheit rasch zur Verfügung gestellt, wodurch sich der Pufferkondensator auch rasch entlädt. Die Nachladung des Pufferkondensators erfolgt dann langsamer über den elektrischen Versorgungsstrom der Energiespeichereinheit. Ohne Pufferkondensator könnte der im Fall einer solchen Lastspitze auftretende kurzzeitige hohe Versorgungsstrom bei einer insbesondere nur zu diskreten Zeitpunkten durchgeführten Stromerfassung übersehen werden, mit der Folge, dass die mit dieser Versorgungsstromspitze einhergehende der Energiespeichereinheit entnommene Ladungsmenge ebenfalls übersehen wird. Dann werden auch die Restladungsmenge und damit die verbleibende Verfügbarkeitszeitspanne falsch ermittelt. Mit dem Pufferkondensator wird diese Fehlerquelle vermieden, da das Nachladen des Pufferkondensators nach einer solchen Lastspitze deutlich langsamer erfolgt, so dass der aus der Energiespeichereinheit stammende Nachladestrom (= Versorgungsstrom) sicher erfasst und dementsprechend bei der Bestimmung der der Energiespeichereinheit entnommenen Ladungsmenge mit berücksichtigt wird. Der Pufferkondensator glättet den der Energiespeichereinheit entnommenen elektrischen Versorgungsstrom. Außerdem stabilisiert er eine an der Elektronikeinheit an deren Energieanschluss anstehende Verbraucher-Versorgungsspannung. Aufgrund der angesprochenen Glättung ist es insbesondere ausreichend, wenn der elektrische Versorgungsstrom nicht permanent, d.h. nicht kontinuierlich, sondern nur zu diskreten Zeitpunkten in einem vorzugsweise sogar relativ groben Zeitraster mit einem zeitlichen Abstand zwischen zwei aufeinander folgenden Messungen von z.B. bis zu mehrere Stunden erfasst wird. Der Pufferkondensator hat einen Kapazitätswert von insbesondere zwischen 0,01 F und 100 F, vorzugsweise zwischen 0,5 F und 5 F. Ein typischer Wert liegt bevorzugt bei etwa 0,5 F z.B. bei einer Elektronikeinheit mit niedrigem Energieverbrauch, beispielsweise wenn die Elektronikeinheit ein relativ energiesparendes Kommunikationsmodul, insbesondere ein LoRa-Kommunikationsmodul, aufweist, oder bei etwa 5 F z.B. bei einer Elektronikeinheit mit hohen Lastspitzen, beispielsweise wenn die Elektronikeinheit ein Kommunikationsmodul mit zumindest temporär vergleichsweise hohem Energiebedarf, insbesondere ein Nb IoT-Kommunikationsmodul, aufweist. Die Abkürzung "LoRa" steht für "Long Range" und bezeichnet eine Funktechnologie, die eine sehr stromsparende und weitreichende Datenübertragung ermöglicht. Die Abkürzung "Nb IoT" steht für "Narrowband Internet of things" und bezeichnet ebenfalls eine Funktechnologie, die beispielsweise bei fernabfragbaren Mess- oder Zählgeräten, wie thermischen oder elektrischen Verbrauchszählern oder Durchflusszählern, zum Einsatz kommt. Die Nb IoT-Funktechnologie ermöglicht aufgrund der guten Netzabdeckung und Gebäudedurchdringung die Übertragung von Verbrauchsdaten in regelmäßigen Abständen an einen zentralen Server des Versorgers oder Netzbetreibers. Dabei handelt es sich um kleine Datenmengen, die keine breitbandigen Datennetze erfordern.

Vorteilhafte Ausgestaltungen der erfindungsgemäßen Elektronikeinrichtung ergeben sich aus den Merkmalen der von Anspruch 1 abhängigen Ansprüche.

Günstig ist eine Ausgestaltung, bei der die Strommessstelle einen elektrischen Strommesswiderstand hat, wobei der Strommesswiderstand zwischen einem ersten elektrischen Anschlusspunkt des Ausgangsanschlusses der Energiespeichereinheit und dem Pufferkondensator angeordnet ist. Die Erfassung des elektrischen Versorgungsstroms mittels eines Strommesswiderstands ist einfach umzusetzen und liefert dennoch sehr zuverlässige Messergebnisse. Insbesondere hat die Strommessstelle außerdem auch eine Spannungsmesseinheit, die die über dem Strommesswiderstand abfallende Spannung erfasst. Der erfasste Spannungswert ist ein Maß für den interessierenden Versorgungsstrom, welcher sich über das Ohm'sche Gesetz bei bekanntem Wert des Strommesswiderstands aus dem erfassten Spannungswert ermitteln lässt. Der Strommesswiderstand ist insbesondere in Reihe zu dem Innenwiderstand der Energiespeichereinheit geschaltet. Beide Widerstände bilden vorzugsweise einen Spannungsteiler. Der Strommesswiderstand hat einen Widerstandswert von insbesondere zwischen 10 Ω und 1 kΩ, vorzugsweise zwischen 50 Ω und 300 Ω. Ein typischer Wert liegt bevorzugt bei etwa 100 Ω. Der Strommesswiderstand kann ein Standardwiderstand sein. Vorzugsweise kann er, z.B. bei hohen Anforderungen an die Messgenauigkeit, aber auch ein stabiler Widerstand sein, dessen Widerstandswert sich insbesondere nicht mit der Temperatur und/oder insbesondere nicht mit der Zeit verändert. So kann sein Temperaturkoeffizient vorteilhafterweise sehr niedrig sein und insbesondere im Bereich zwischen 5 ppm/K und 100 ppm/K liegen. Ein typischer Wert ist insbesondere 25 ppm/K.

Gemäß einer weiteren günstigen Ausgestaltung ist die Steuer-/Auswerteinheit dazu ausgelegt, die in der Energiespeichereinheit noch gespeicherte elektrische Restladungsmenge zyklisch zu diskreten und jeweils ein Mittelungsintervall zeitlich auseinander liegenden Ermittlungszeitpunkten zu ermitteln. Die nur zyklische Ermittlung der Restladungsmenge ist energiesparend und dennoch für den beabsichtigten Zweck vollkommen ausreichend. Es genügt, nur ab und zu eine aktualisierte Information über den Ladezustand der Energiespeichereinheit. Das Mittelungsintervall kann dabei insbesondere innerhalb des Zeitbereichs zwischen einem halben Tag und 14 Tagen, vorzugsweise zwischen einem Tag und einer Woche, liegen.

Beispielsweise kann es einen halben Tag, einen ganzen Tag, zwei Tage oder auch eine Woche lang sein. Andere (kürzere oder längere) Mittelungsintervalle sind aber grundsätzlich ebenfalls möglich. Falls die Elektronikeinheit so aufgebaut ist oder betrieben wird, dass sie zyklisch einen besonders hohen Energiebedarf (= Lastspitze) hat, beispielsweise, weil sie dann jeweils ein Funksignal überträgt, ist es vorteilhaft, wenn das Mittelungsintervall ein Vielfaches des zumindest im Wesentlichen konstanten und vorzugsweise bekannten zeitlichen Lastspitzenabstands ist, der zwischen zwei aufeinander folgenden Zeitpunkten liegt, an denen die Elektronikeinheit den genannten hohen Energiebedarf hat. Dadurch wird sichergestellt, dass in jedem Mittelungsintervall zumindest in Bezug auf den bekannten oder absehbaren Energiebedarf annähernd gleiche Verhältnisse herrschen.

Gemäß einer weiteren günstigen Ausgestaltung ist die Steuer-/Auswerteinheit dazu ausgelegt, den elektrischen Versorgungsstrom zyklisch zu diskreten und jeweils ein Messintervall zeitlich auseinander liegenden Erfassungszeitpunkten zu erfassen, und insbesondere aus den innerhalb jedes der Mittelungsintervalle erfassten Werten des elektrischen Versorgungsstroms jeweils einen Versorgungsstrommittelwert für das betreffende Mittelungsintervall und daraus die in diesem Mittelungsintervall entnommene elektrische Ladungsmenge zu bestimmen. Auch die nur zyklische Erfassung des Versorgungsstroms ist energiesparend, insbesondere, da verglichen mit einer kontinuierlichen Messung der Energiebedarf für die Erfassung eines Messwerts nur deutlich seltener anfällt. Die zyklische Erfassung des Versorgungsstroms ermöglicht vorteilhafterweise einen Kompromiss zwischen einerseits Messgenauigkeit und andererseits Aufwand an Energieverbrauch und/oder an Zeit, während derer sich die Elektronikeinheit in einem aktiven Modus befindet. Die Mittelung der in einem Mittelungsintervall erfassten Werte des elektrischen Versorgungsstroms bewirkt zuverlässigere Ergebnisse. Außergewöhnliche Werte des Versorgungsstroms, die z.B. durch Störeffekte (beispielsweise Einkopplung von EMV-Störungen) hervorgerufen werden und für den Zustand der Energiespeichereinheit dementsprechend keine Aussagekraft haben, gehen aufgrund der Mittelung nicht oder nur weniger stark in die Ergebnisse ein. Die Mittelung führt insofern zu einer günstigen Glättung. Das Messintervall ist insbesondere kürzer als das Mittelungsintervall. Das Mittelungsintervall kann insbesondere um einen dreistelligen Faktor größer sein als das Messintervall. Insbesondere liegt das Verhältnis von Mittelungsintervall zu Messintervall im Bereich zwischen 100 und 1000. Das Mittelungsintervall ist vorzugsweise ein ganzzahliges Vielfaches des Messintervalls. Pro Mittelungsintervall werden insbesondere stets die gleiche Anzahl an Erfassungen des Versorgungsstroms durchgeführt, wobei diese Anzahl dem genannten ganzzahligen Vielfachen entspricht. Ein typischer Wert des Verhältnisses von Mittelungsintervall zu Messintervall ist 360. Beträgt das Mittelungsintervall bei diesem typischen Fall z.B. einen Tag, hat das Messintervall einen Wert von 240 Sekunden oder 4 Minuten. Außerdem ist es vorteilhaft, wenn in jedem Mittelungsintervall immer die gleiche Anzahl bekannter oder erwartbarer Lastspitzen-Ereignisse, also von Ereignissen mit einem hohen Energiebedarf, wie z.B. Funk-Ereignissen, liegt. Dadurch wird eine Verfälschung des bestimmten Versorgungsstrommittelwerts vermieden, die andernfalls daher rühren würde, dass ein solches bekanntes oder erwartbares Lastspitzen-Ereignis trotzdem zufällig in einem von zwei zeitlich aufeinander folgenden Mittelungsintervallen zu liegen kommen könnte.

Gemäß einer weiteren günstigen Ausgestaltung ist die Steuer-/Auswerteinheit dazu ausgelegt, den Versorgungsstrommittelwert für das betreffende Mittelungsintervall jeweils mittels einer linearen Mittelung, einer quadratischen Mittelung oder einer Tiefpass-Mittelung zu bestimmen. Diese Mittelungen lassen sich einfach umsetzen.

Gemäß einer weiteren günstigen Ausgestaltung ist das Messintervall kleiner als die Hälfte des Produkts der Werte des Pufferkondensators und eines Strommesswiderstands der Strommessstelle. Dieses Produkt ist insbesondere die Zeitkonstante des RC-Glieds aus dem Strommesswiderstand und dem Pufferkondensator. Mit einem so dimensionierten Messintervall wird erreicht, dass alle relevanten Versorgungsstrom-Vorgänge erfasst werden. Es resultiert also eine hohe Erfassungsgenauigkeit. Demgegenüber (deutlich) längere Messintervalle könnten andernfalls dazu führen, dass zu selten gemessen wird und die Exponentialkurve der Aufladung des Pufferkondensators nicht mehr genau genug angenähert wird.

Gemäß einer weiteren günstigen Ausgestaltung ist am Ausgangsanschluss der Energiespeichereinheit eine Spannungsmessstelle zur Erfassung einer elektrischen Speicher-Versorgungsspannung der Energiespeichereinheit angeschlossen. Die Erfassung der Speicher-Versorgungsspannung kann dabei insbesondere zu- und abschaltbar sein. Insbesondere kann die Spannungsmessstelle einen parallel zum Ausgangsanschluss der Energiespeichereinheit angeordneten vorzugsweise zu-/abschaltbaren Spannungsteiler haben, der mit einem Spannungsteilerwiderstand an eine Spannungsmesseinheit angeschlossen ist, um die über diesem Spannungsteilerwiderstand abfallende Spannung als Maß für die Speicher-Versorgungsspannung zu erfassen. Bei dieser zur Erfassung der Speicher-Versorgungsspannung vorgesehenen Spannungsmesseinheit kann es sich optional, aber nicht zwingend um die gleiche Spannungsmesseinheit handeln, die auch bei der vorstehend beschriebenen günstigen Ausgestaltung der Strommessung mittels eines Strommesswiderstands zum Einsatz kommt. Vorzugsweise kann dann ein Umschalter vorhanden sein, so dass die Spannungsmesseinheit abwechselnd für beide Messanwendungen zur Verfügung steht. Aufgrund dieser optionalen doppelten Verwendung der Spannungsmesseinheit resultiert ein besonders einfacher und kostengünstiger Aufbau. Die durch die Erfassung der Speicher-Versorgungsspannung gewonnenen Informationen können vorteilhafterweise zur Kontrolle der durch die Stromerfassung gewonnenen Erkenntnisse über die verbleibende Verfügbarkeitszeitspanne der Energiespeichereinheit herangezogen werden. So ermöglicht die erfasste Speicher-Versorgungsspannung eine zusätzliche Aussage über den aktuellen Zustand bzw. die tatsächliche Güte der Energiespeichereinheit. So kann sich beispielsweise der Wert des Innenwiderstands der Energiespeichereinheit alterungsbedingt und/oder mit der Zeit verändern. Insbesondere kann er steigen, was dann auch an einem veränderten Messwert der erfassten Speicher-Versorgungsspannung erkannt werden kann. Um den Innenwiderstand möglichst genau zu bestimmen, ist die Steuer-/Auswerteinheit insbesondere dazu ausgelegt, die Speicher-Versorgungsspannung bei hoher Last mit einem Versorgungsstrom von insbesondere mindestens 0,5 mA und bei niedriger Last mit einem Versorgungsstrom von insbesondere höchstens 50 $\mu$A zu erfassen. Die Spannungserfassung ist also eine zusätzliche Überwachung der Energiespeichereinheit, insbesondere deren Innenwiderstands, und ermöglicht außerdem eine Erkennung, ob die Energiespeichereinheit möglicherweise vorzeitig ausfallen wird, beispielsweise, weil sie defekt ist, es sich um eine gebrauchte oder unvollständig aufgeladene Energiespeichereinheit handelt, oder aus ihr schon mehr Ladung entnommen worden ist, als die Auswertung der Stromerfassung ergeben hat.

Gemäß einer weiteren günstigen Ausgestaltung ist die Elektronikeinrichtung als Verbrauchszähler zur Erfassung eines elektrischen oder thermischen Verbrauchs oder als Durchflusszähler zur Erfassung eines Durchflusses ausgestaltet. Derartige Verbrauchszähler sind beispielsweise Energiezähler, insbesondere Wärmezähler, Kältezähler oder kombinierte Wärme-/ Kältezähler. All diese Zählgeräte enthalten in ihrer aktuellen Bauform elektronische Komponenten und benötigen deshalb für den ordnungsgemäßen Betrieb eine elektrische Energieversorgung. Zu diesem Zweck sind sie mit einer Energiespeichereinheit, z.B. in Form einer Batterie oder eines Akkus, ausgestattet. Um den Wartungsaufwand zu reduzieren, sollte die Energiespeichereinheit dieser Zählgeräte möglichst zielgerichtet, also erst kurz bevor sie nicht mehr genügend Ladung zur Versorgung des jeweiligen Zählgeräts enthält, ausgetauscht oder wieder aufgeladen werden.

Eine weitere Aufgabe der Erfindung besteht darin, ein Verfahren zum Betrieb einer Elektronikeinrichtung der eingangs bezeichneten Art mit gegenüber dem Stand der Technik verbesserten Eigenschaften anzugeben.

Zur Lösung dieser weiteren Aufgabe wird ein Verfahren entsprechend den Merkmalen des Anspruchs 9 angegeben. Bei dem erfindungsgemäßen Verfahren zum Betrieb einer Elektronikeinrichtung wird die für den Betrieb der Elektronikeinheit benötigte elektrische Energie zumindest teilweise in einem am Energieanschluss parallel zur Elektronikeinheit geschalteten Pufferkondensator zwischengespeichert, und an dem Energieanschluss in die Elektronikeinheit eingespeist. Weiterhin wird der elektrische Versorgungsstrom, insbesondere zwischen einem Ausgangsanschluss der Energiespeichereinheit und dem Pufferkondensator, erfasst, und aus dem erfassten elektrischen Versorgungsstrom eine aus der Energiespeichereinheit entnommene elektrische Ladungsmenge und eine aktuell in der Energiespeichereinheit noch gespeicherte elektrische Restladungsmenge ermittelt.

Die aktuelle Restladungsmenge $Q_R(t)$ wird insbesondere über eine Auswertung, vorzugsweise eine digitale Auswertung, der vorstehend bereits im Zusammenhang mit der erfindungsgemäßen Elektronikeinrichtung angesprochenen Gleichung (1):

$$Q_R(t) = Q_0 - Q_E(t) = Q_0 - \int_{t_0}^{t} I_V(t)dt \qquad (1)$$

bestimmt.

Insbesondere kann weiterhin aus der ermittelten aktuell in der Energiespeichereinheit noch gespeicherten elektrischen Restladungsmenge $Q_R(t)$ eine verbleibende Verfügbarkeitszeitspanne der Energiespeichereinheit bestimmt werden, vorzugsweise zur Anzeige gebracht werden, und/oder bevorzugt an eine andere Einheit oder Einrichtung zur weiteren Verwertung dieser Information übertragen werden. Die verbleibende Verfügbarkeitszeitspanne wird dabei vorzugsweise durch eine Berechnung bestimmt, im Rahmen derer z.B. die ermittelte aktuell in der Energiespeichereinheit noch gespeicherte elektrische Restladungsmenge $Q_R(t)$ durch einen typischen Wert des Versorgungsstroms, beispielsweise einen Versorgungsstrommittelwert oder einen Versorgungsstromerfahrungswert, dividiert wird.

Das Verfahren zum Betrieb einer Elektronikeinrichtung wird insbesondere bei einem Verbrauchszähler zur Erfassung eines elektrischen oder thermischen Verbrauchs oder bei einem Durchflusszähler zur Erfassung eines Durchflusses angewendet.

Das erfindungsgemäße Verfahren und seine Ausgestaltungen bieten im Wesentlichen die gleichen Vorteile, die bereits im Zusammenhang mit der erfindungsgemäßen Elektronikeinrichtung und deren Ausgestaltungen beschrieben worden sind.

Günstig ist eine Ausgestaltung, bei der der elektrische Versorgungsstrom mittels eines elektrischen Strommesswiderstands erfasst wird. Insbesondere wird dazu an dem Strommesswiderstand auch eine Spannungsmessung vorgenommen. Vorzugsweise wird der Strommesswiderstand zwischen einen ersten elektrischen Anschlusspunkt eines Ausgangsanschlusses der Energiespeichereinheit und den Pufferkondensator geschaltet.

Gemäß einer weiteren günstigen Ausgestaltung wird die in der Energiespeichereinheit noch gespeicherte elektrische Restladungsmenge zyklisch zu diskreten und jeweils ein Mittelungsintervall zeitlich auseinander liegenden Ermittlungszeitpunkten ermittelt.

Gemäß einer weiteren günstigen Ausgestaltung wird der elektrische Versorgungsstrom zyklisch zu diskreten und jeweils ein Messintervall zeitlich auseinander liegenden Erfassungszeitpunkten erfasst. Weiterhin wird insbesondere aus den innerhalb jedes der Mittelungsintervalle erfassten Werten des elektrischen Versorgungsstroms jeweils einen Versorgungsstrommittelwert für das betreffende Mittelungsintervall und daraus die in diesem Mittelungsintervall entnommene elektrische Ladungsmenge bestimmt.

Gemäß einer weiteren günstigen Ausgestaltung wird der Versorgungsstrommittelwert für das betreffende Mittelungsintervall jeweils mittels einer linearen Mittelung, einer quadratischen Mittelung oder einer Tiefpass-Mittelung bestimmt.

Gemäß einer weiteren günstigen Ausgestaltung wird für das Messintervall ein Wert vorgesehen, der kleiner als die Hälfte des Produkts der Werte des Pufferkondensators und eines Strommesswiderstands ist.

Gemäß einer weiteren günstigen Ausgestaltung wird eine elektrische Speicher-Versorgungsspannung der Energiespeichereinheit erfasst. Insbesondere erfolgt dies mittels einer an einem Ausgangsanschluss der Energiespeichereinheit angeschlossen Spannungsmesseinheit.

Weitere Merkmale, Vorteile und Einzelheiten der Erfindung ergeben sich aus der nachfolgenden Beschreibung von Ausführungsbeispielen anhand der Zeichnung. Es zeigt:

Fig. 1     ein Blockschaltbild einer Elektronikeinrichtung mit einer ladungsüberwachten Energiespeichereinheit, und

Fig. 2     ein elektrisches Schaltbild eines Ausführungsbeispiels einer Elektronikeinrichtung gemäß Fig. 1.

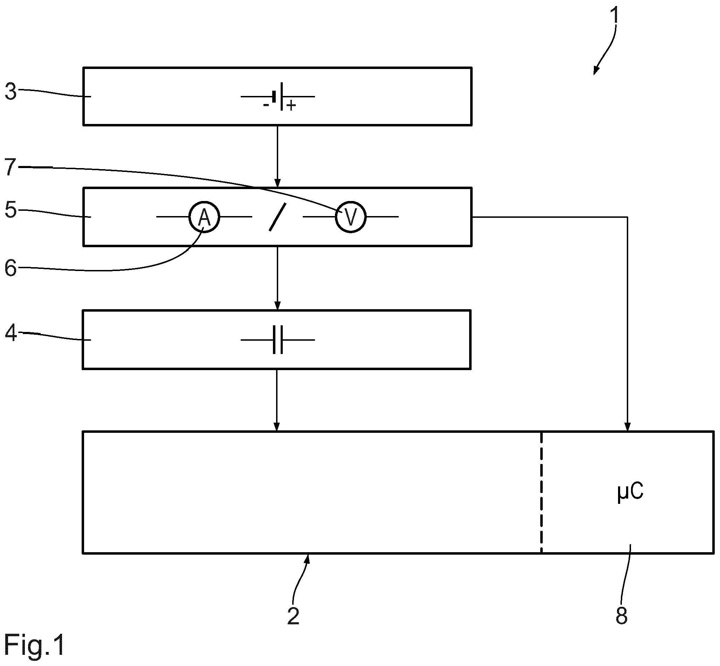

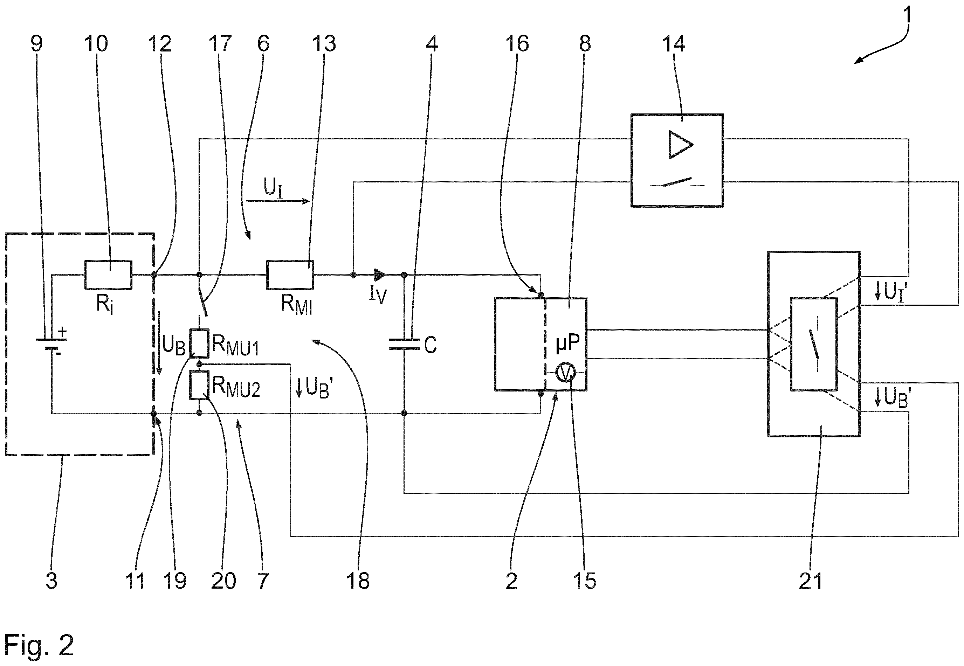

Einander entsprechende Teile sind in den Fig. 1 und 2 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

In Fig. 1 ist ein Ausführungsbeispiel einer Elektronikeinrichtung 1 mit einem Verbraucher in Form einer Elektronikeinheit 2, einer Energiespeichereinheit 3, einem Pufferkondensator 4 sowie einer Messstelle 5 zur Erfassung der von der Energiespeichereinheit 3 zur Versorgung der Elektronikeinheit 2 zur Verfügung gestellten elektrischen Energie gezeigt.

Beim gezeigten Ausführungsbeispiel ist die Elektronikeinheit 2 ein thermischer Verbrauchszähler, wie beispielsweise ein Wärmezähler oder ein Kältezähler. Prinzipiell ist aber auch eine andere Ausführungsform der Elektronikeinheit 2 möglich. Zum Betrieb benötigt die Elektronikeinheit 2 elektrische Energie, die von der Energiespeichereinheit 3 bereitgestellt wird.

Die Energiespeichereinheit 3 ist beim gezeigten Ausführungsbeispiel eine Batterie, wobei auch hier andere Ausführungsformen, beispielsweise als Akku, möglich sind.

Der Pufferkondensator 4 dient der Zwischenspeicherung zumindest eines Teils der von der Energiespeichereinheit 3 zum Betrieb der Elektronikeinheit 2 bereitgestellten elektrischen Energie.

Die Messstelle 5 enthält mindestens eine Strommessstelle 6 zur Erfassung eines elektrischen Versorgungsstroms Iv der Energiespeichereinheit 3. Optional kann sie zusätzlich auch eine Spanungsmessstelle 7 zur Erfassung einer elektrischen Speicher-Versorgungsspannung $U_B$ der Energiespeichereinheit 3 haben.

Die Elektronikeinheit 2 weist eine digitale Untereinheit mit beispielsweise einem Mikroprozessor und den üblichen elektrischen/elektronischen Zusatzkomponenten auf. Diese digitale Untereinheit dient beim gezeigten Ausführungsbeispiel zur Wahrnehmung von Steuerungs-/Auswerteaufgaben sowohl im Zusammenhang mit der eigentlichen Funktion der Elektronikeinheit 2, also im Zusammenhang mit der thermischen Verbrauchszählung, als auch im Zusammenhang mit der Überwachung des Ladezustands der Energiespeichereinheit 3. Insofern kann ein logischer oder physikalischer Teil der digitalen Untereinheit als eine Steuer-/Auswerteeinheit 8 zur Überwachung des Ladezustands der Energiespeichereinheit 3 verstanden werden. Die Steuer-/Auswerteeinheit 8 ist somit beim gezeigten Ausführungsbeispiel ein integraler Bestandteil der Elektronikeinheit 2. Es gibt aber auch alternative Ausführungsbeispiele, bei denen die Steuer-/Auswerteeinheit 8 zur Überwachung des Ladezustands der Energiespeichereinheit 3 eine von der Elektronikeinheit 2 unabhängige gesonderte Einheit oder Baugruppe ist.

Die Steuer-/Auswerteeinheit 8 ist dazu ausgelegt, aus den an der Messstelle 5 erfassten Messwerten, also aus den Messwerten des Versorgungsstroms Iv und gegebenenfalls der Speicher-Versorgungsspannung $U_B$, eine aus der Energiespeichereinheit 3 entnommene elektrische Ladungsmenge $Q_E(t)$, eine aktuell in der Energiespeichereinheit 3 noch gespeicherte elektrische Restladungsmenge $Q_R(t)$ und eine verbleibende Verfügbarkeitszeitspanne der Energiespeichereinheit 3 zu ermitteln. Die verbleibende Verfügbarkeitszeitspanne ist dabei die verbleibende Zeitdauer bis zu dem Zeitpunkt, an dem die Energiespeichereinheit 3 nicht mehr ausreichend elektrische Energie zur Versorgung der Elektronikeinheit 2 zur Verfügung stellen wird und deshalb ausgetauscht werden muss. Der Austausch erfolgt also insbesondere erst dann, wenn er tatsächlich notwendig ist. Die in der Elektronikeinrichtung 1 fundiert aus Messwerten ermittelte Information zur verbleibenden Verfügbarkeitszeitspanne der Energiespeichereinheit 3 ermöglicht somit vorteilhafterweise eine sehr effiziente und zielgerichtete Wartung der Energiespeichereinheit 3.

Im Folgenden wird die diesbezügliche Funktionsweise der Steuer-/Auswerteeinheit 8 bzw. das in der Steuer-/Auswerteeinheit 8 implementierte Verfahren näher erläutert.

Die Steuer-/Auswerteinheit 8 ist dazu ausgelegt, die aktuell noch in der Energiespeichereinheit vorhandene Restladungsmenge $Q_R(t)$ über eine digitale Auswertung der bereits vorstehend angegebenen Gleichung (1):

$$Q_R(t) = Q_0 - Q_E(t) = Q_0 - \int_{t_0}^{t} I_V(t)dt \qquad (1)$$

zu bestimmen, wobei $Q_0$ die Anfangsladungsmenge der Energiespeichereinheit 3, $Q_E(t)$ die bislang der Energiespeichereinheit 3 entnommene Ladungsmenge, t der aktuelle Zeitpunkt, $t_0$ der Anfangszeitpunkt, ab dem die Energieabgabe aus der Energiespeichereinheit 3 erfolgt ist, und $I_V(t)$ der elektrische Versorgungsstrom zum jeweiligen Zeitpunkt t ist.

Die Ermittlung der Restladungsmenge $Q_R(t)$ erfolgt zyklisch zu diskreten Ermittlungszeitpunkten $t_i$ mit dem Index $i = \{1; n\}$, welcher wie n eine natürliche Zahl ist. Zwischen zwei zeitlich aufeinanderfolgenden Ermittlungszeitpunkten $t_i$ und $t_{i+1}$ liegt jeweils eine einheitliche Zeitspanne in Form eines Mittelungsintervalls $t_{Mitt}$. Innerhalb eines Mittelungsintervalls $t_{Mitt}$ wird der Versorgungsstrom $I_V(t)$ ebenfalls zyklisch zu diskreten Erfassungszeitpunkten $t_{i,k}$ erfasst, wobei der erste Index i die Nummer des betreffenden Mittelungsintervalls und der zweite Index k mit $k = \{1; m\}$, welcher wie m eine natürliche Zahl ist, die Nummer eines innerhalb des betreffenden Mittelungsintervalls liegenden Messintervalls angibt. Das Messintervall $t_{Mess}$ ist dabei die einheitliche Zeitspanne, die jeweils zwischen zwei zeitlich aufeinanderfolgenden Messungen des Versorgungsstroms $I_V(t)$ liegt.

Innerhalb der digitalen Steuer-/Auswerteinheit 8 wird das Ergebnis der analogen eine Integralbeziehung aufweisenden Gleichung (1) zum Zeitpunkt $t_i$ am Ende des Mittelungsintervalls mit der Nummer i näherungsweise mittels der folgenden iterativen diskreten Beziehung bestimmt:

$$Q_R(t_i) = Q_R(t_{i-1}) - Q_E(t_i) = Q_R(t_{i-1}) - I_{V\_Mitt}(t_i) * t_{Mitt} \qquad (2)$$

mit

$$Q_R(t_1) = Q_0 - Q_E(t_1) = Q_0 - I_{V\_Mitt}(t_1) * t_{Mitt} \qquad (3)$$

wobei $Q_R(t_i)$ die Restladungsmenge am Ende des Mittelungsintervalls mit der Nummer i, $Q_R(t_{i-1})$ die Restladungsmenge am Ende des vorherigen Mittelungsintervalls mit der Nummer i-1, $Q_0$ die Anfangsladungsmenge, $Q_E(t_i)$ die innerhalb des Mittelungsintervalls mit der Nummer i entnommene Ladungsmenge, $t_{Mitt}$ die Zeitdauer eines Mittelungsintervalls und $I_{V\_Mitt}(t_i)$ einen im Mittelungsintervall mit der Nummer i bestimmten Versorgungsstrommittelwert des Versorgungsstroms $I_V(t)$ angibt. Der Versorgungsstrommittelwert $I_{V\_Mitt}(t_i)$ kann dabei als linearer oder quadratischer Mittelwert aller innerhalb des betreffenden Mittelungsintervalls mit der Nummer i erfassten Messwerte des Versorgungsstroms $I_V(t)$ sein. Eine Bildung durch eine iterative diskrete Tiefpass-Mittelung gemäß:

$$I_{V\_Mitt}(t_{i,k}) = I_{V\_Mitt}(t_{i,k-1}) * q + I_V(t_{i,k}) * (1 - q) \qquad (4)$$

ist ebenfalls möglich, wobei q eine reelle Zahl größer als Null und kleiner als Eins ist. Der in den Gleichungen (2) und (3) einzusetzende Versorgungsstrommittelwert $I_{V\_Mitt}(t_i)$ ist gleich dem Wert von $I_{V\_Mitt}(t_{i,k=m})$, welcher sich aus Gleichung (4) für den Zeitpunkt $t_{i,k=m}$, also zum Ende des betreffenden Mittelungsintervalls, ergibt.

Die prognostizierte verbleibende Zeitdauer $t_{LE}$ bis zum Ladungsende, also bis zum Zeitpunkt, ab dem in der Energiespeichereinheit 3 nicht mehr ausreichend elektrische Energie zur Versorgung der Elektronikeinheit 2 zur Verfügung stehen wird, (= verbleibende Verfügbarkeitszeitspanne) ergibt sich aus der Gleichung:

$$t_{LE} = \frac{Q_R(t)}{I_{V\_Mitt}} - t_{SP} \qquad\qquad (5)$$

wobei $Q_R(t)$ wiederum die aktuelle Restladungsmenge in der Energiespeichereinheit 3, $I_{V\_Mitt}$ den im letzten oder aktuellen Mittelungsintervall bestimmten Mittelwert des Versorgungsstroms $I_V(t)$ und $t_{SP}$ einen insbesondere optionalen zeitlichen Sicherheitspuffer angibt. Dieser Sicherheitspuffer verhindert vorzugsweise, dass die Energiespeichereinheit 3 bis zum allerletzt möglichen Zeitpunkt verwendet wird und dann möglicherweise doch noch vor einem Austausch oder einer Aufladung ausfällt.

In Fig. 2 ist ein elektrisches Schaltbild eines Ausführungsbeispiels der Elektronikeinrichtung 1 gemäß Fig. 1 gezeigt.

Die (reale) Energiespeichereinheit 3 ist symbolisiert durch eine Reihenschaltung einer idealen Batterie 9 mit einem Innenwiderstand 10 mit dem Widerstandswert $R_i$. Die Energiespeichereinheit 3 hat einen Ausgangsanschluss 11, dessen erster elektrischer Anschlusspunkt 12 an einen Strommesswiderstand 13 mit einem Widerstandswert $R_{MI}$ von 100 $\Omega$ angeschlossen ist. Der Innenwiderstand 10 und der Strommesswiderstand 13 bilden einen Spannungsteiler, der von dem elektrischen Versorgungsstrom Iv durchflossen wird. Der Strommesswiderstand 13 und ein hochohmiger Messabgriff der über ihm abfallenden Spannung $U_I$ sind ebenso wie ein (optionaler) Verstärker 14 und eine Spannungsmesseinheit 15 Bestandteile der Strommessstelle 6. Beim gezeigten Ausführungsbeispiel ist die Spannungsmesseinheit 15 außerdem ein integraler Bestandteil der Steuer-/Auswerteeinheit 8. Bei einem nicht gezeigten alternativen Ausführungsbeispiel kann die Spannungsmesseinheit 15 aber auch gesondert zu der Steuer-/ Auswerteeinheit 8 ausgebildet sein. Der Verstärker 14 ist insbesondere zu-/ abschaltbar, um den Energiebedarf für die Verstärkung des Messsignals (= Spannung $U_I$) zu minimieren. Der Verstärker 14 wird vorzugsweise nur zu den maßgeblichen Zeitpunkten, an denen eine Erfassung des Versorgungsstroms Iv erfolgt, eingeschaltet, also insbesondere zyklisch im Abstand des Messintervalls $t_{Mess}$. Der Verstärker 14 passt den Pegel der am Strommesswiderstand 13 abgegriffenen Spannung $U_I$ an den Eingangspegel der nachfolgenden Spannungsmesseinheit 15 an. An deren Eingang steht dann die verstärkte Spannung $U_I'$ an.

Die Reihenschaltung der Energiespeichereinheit 3 und des Strommesswiderstands 13 ist parallel zu dem Pufferkondensator 4 mit einem Kapazitätswert C von 5 F angeordnet. Außerdem liegt der Pufferkondensator 4 auch parallel zu einem Energieanschluss 16 der Elektronikeinheit 2. Er überbrückt den Energieeinschluss 16. Der Versorgungsstrom Iv lädt den Pufferkondensator 4 auf, so dass elektrische Energie der Energiespeichereinheit 3 dort zu einem Teil zwischengespeichert wird. Die Versorgung der Elektronikeinheit 2 mit elektrischer Energie in einem Lastfall erfolgt dann sowohl aus dem Zwischenspeicher des Pufferkondensators 4 als auch aus der Energiespeichereinheit 3. Die Zeitkonstante des RC-Glieds aus dem Strommesswiderstand 13 und dem Pufferkondensator 4 bestimmt die Lade-/Entladevorgänge des Pufferkondensators 4. Das vorstehend angesprochenen Messintervall $t_{Mess}$, das den Abstand zwischen zwei Zeitpunkten zur Erfassung des Versorgungsstroms Iv angibt, ist insbesondere kleiner als 50 % der Zeitkonstante dieses RC-Glieds. Beim gezeigten Ausführungsbeispiel beträgt das Messintervall $t_{Mess}$ 240 s.

Als Bestandteil der (optionalen) Spannungsmessstelle 7 ist ein mittels eines Schalters 17 zu-/abschaltbarer Spannungsteiler 18 parallel zum Ausgangsanschluss 11 der Energiespeichereinheit 3 angeordnet. Die Zu-/Abschaltbarkeit des Spannungsteilers 18 dient, ähnlich wie der zu/abschaltbare Verstärker 14 der Strommessstelle 6, der Minimierung des Energiebedarfs für die Erfassung der Speicher-Versorgungsspannung $U_B$ der Energiespeichereinheit 3.

Der Spannungsteiler 18 überbrückt im zugeschalteten Zustand den Ausgangsanschluss 11. Er ist eine Reihenschaltung eines ersten Spannungsteilerwiderstands 19 mit einem Widerstandswert $R_{MU1}$ und eines zweiten Spannungsteilerwiderstands 20 mit einem Widerstandswert $R_{MU2}$. Der Spannungsteiler 18 kann ein beliebiges Teilungsverhältnis haben. Sogar der Extremfall eines verschwindenden ersten Spannungsteilerwiderstands 19, also einem Widerstandswert $R_{MU1}$ von null, und eines unendlichen zweiten Spannungsteilerwiderstands 20 ist möglich. Insbesondere kann das Teilungsverhältnis je nach Eingangspegel der nachfolgenden Spannungsmesseinheit 15 gewählt werden.

Als Maß für die Speicher-Versorgungsspannung $U_B$ wird die am zweiten Spannungsteilerwiderstand 20 abfallende Spannung $U_B'$ herangezogen, welche zur Erfassung mittels eines wiederum hochohmigen Messabgriffs der Spannungsmesseinheit 15 zugeführt wird. Die Spannungsmessstelle 7 hat als Bestandteile somit zumindest den Spannungsteiler 18, den Schalter 17, den hochohmigen Messabgriff für die am zweiten Spannungsteilerwiderstand 20 abfallende Spannung $U_B'$ und die Spannungsmesseinheit 15. Letztere kann Bestandteil sowohl der Strommessstelle 6 als auch der Spannungsmessstelle 7 sein. Die Zuordnung erfolgt z.B. mittels eines Umschalters 21. In der Steuer-/Auswerteeinheit 8 wird die erfasste Speicher-Versorgungsspannung $U_B$ zur zusätzlichen Überwachung des Zustands der Energiespeichereinheit 3 verwendet. Insbesondere wird mit dieser weiteren Messinformation die aus der Erfassung des Versorgungsstroms Iv gewonnene verbleibende Verfügbarkeitszeitspanne $t_{LE}$ verifiziert und/oder auf Plausibilität geprüft.

Insgesamt erlaubt die Elektronikeinrichtung 1 eine fundierte und insbesondere durch erfasste Messgrößen gestützte Aussage über den Zustand der Energiespeichereinheit 3, insbesondere über die aktuell in der Energiespeichereinheit 3 noch gespeicherte elektrische Restladungsmenge $Q_R$ und daraus abgeleitet über die verbleibende Verfügbarkeitszeitspanne $t_{LE}$. Damit lässt sich die Energiespeichereinheit 3 längst möglich verwenden, ohne dass dadurch das Risiko eines Ausfalls der Elektronikeinrichtung 1 wegen nicht mehr zur Verfügung stehender elektrischer Energie droht. Die Wartung mit einem Austausch der Energiespeichereinheit 3 kann erst dann erfolgen, wenn die Energiespeichereinheit 3 tatsächlich so weit entladen ist, dass eine Betriebsbereitschaft der Elektronikeinrichtung 1 nicht mehr gewährleistet ist.

**Patentansprüche**

1. Elektronikeinrichtung mit

    a) einer Elektronikeinheit (2) mit einem Energieanschluss (16) zur Einspeisung der für den Betrieb der Elektronikeinheit (2) benötigten elektrischen Energie und
    b) einer Energiespeichereinheit (3), die die Elektronikeinheit (2) mittels eines elektrischen Versorgungsstroms mit der für deren Betrieb benötigten elektrischen Energie versorgt,

    **gekennzeichnet durch**

    c) einen Pufferkondensator (4), der am Energieanschluss (16) elektrisch parallel zur Elektronikeinheit (2) geschaltet ist,
    d) eine Strommessstelle (6) zur Erfassung des elektrischen Versorgungsstroms, wobei die Strommessstelle (6) zwischen einem Ausgangsanschluss (11) der Energiespeichereinheit (3) und dem Pufferkondensator (4) angeordnet ist, und
    e) eine Steuer-/Auswerteinheit (8), die dazu ausgelegt ist, aus dem erfassten elektrischen Versorgungsstrom eine aus der Energiespeichereinheit entnommene elektrische Ladungsmenge und eine aktuell in der Energiespeichereinheit (3) noch gespeicherte elektrische Restladungsmenge zu ermitteln.

2. Elektronikeinrichtung nach Anspruch 1, **dadurch gekennzeichnet, dass** die Strommessstelle (6) einen elektrischen Strommesswiderstand (13) hat, wobei der Strommesswiderstand (13) zwischen einem ersten elektrischen Anschlusspunkt (12) des Ausgangsanschlusses (11) der Energiespeichereinheit (3) und dem Pufferkondensator (4) angeordnet ist.

3. Elektronikeinrichtung nach Anspruch 1 oder 2, **dadurch gekennzeichnet, dass** die Steuer-/Auswerteinheit (8) dazu ausgelegt ist, die in der Energiespeichereinheit (3) noch gespeicherte elektrische Restladungsmenge zyklisch zu diskreten und jeweils ein Mittelungsintervall zeitlich auseinander liegenden Ermittlungszeitpunkten zu ermitteln.

4. Elektronikeinrichtung nach Anspruch 3, **dadurch gekennzeichnet, dass** die Steuer-/Auswerteinheit (8) dazu ausgelegt ist, den elektrischen Versorgungsstrom zyklisch zu diskreten und jeweils ein Messintervall zeitlich auseinander liegenden Erfassungszeitpunkten zu erfassen, und insbesondere aus den innerhalb jedes der Mittelungsintervalle erfassten Werten des elektrischen Versorgungsstroms jeweils einen Versorgungsstrommittelwert für das betreffende Mittelungsintervall und daraus die in diesem Mittelungsintervall entnommene elektrische Ladungsmenge zu bestimmen.

5. Elektronikeinrichtung nach Anspruch 4, **dadurch gekennzeichnet, dass** die Steuer-/Auswerteinheit (8) dazu ausgelegt ist, den Versorgungsstrommittelwert für das betreffende Mittelungsintervall jeweils mittels einer linearen Mittelung, einer quadratischen Mittelung oder einer Tiefpass-Mittelung zu bestimmen.

6. Elektronikeinrichtung nach einem der Ansprüche 4 und 5, **dadurch gekennzeichnet, dass** das Messintervall kleiner als die Hälfte des Produkts der Werte des Pufferkondensators (4) und eines Strommesswiderstands (13) der Strommessstelle (6) ist.

7. Elektronikeinrichtung nach einem der vorhergehenden Ansprüche, **dadurch gekennzeichnet, dass** am Ausgangsanschluss (11) der Energiespeichereinheit (3) eine Spannungsmessstelle (7) zur Erfassung einer elektrischen Speicher-Versorgungsspannung der Energiespeichereinheit (3) angeschlossen ist.

8. Elektronikeinrichtung nach einem der vorhergehenden Ansprüche, **dadurch gekennzeichnet, dass** die Elektronikeinrichtung (1) als Verbrauchszähler zur Erfassung eines elektrischen oder thermischen Verbrauchs oder als Durchflusszähler zur Erfassung eines Durchflusses ausgestaltet ist.

9. Verfahren zum Betrieb einer Elektronikeinrichtung (1),

   a) welche eine Elektronikeinheit (2) mit einem Energieanschluss (16) und eine Energiespeichereinheit (3) aufweist, wobei eine für den Betrieb der Elektronikeinheit (2) benötigte elektrische Energie von der Energiespeichereinheit (3) mittels eines elektrischen Versorgungsstroms zur Verfügung gestellt wird,

   **dadurch gekennzeichnet, dass**

   b) die für den Betrieb der Elektronikeinheit (2) benötigte elektrische Energie

   b1) zumindest teilweise in einem am Energieanschluss (16) parallel zur Elektronikeinheit (2) geschalteten Pufferkondensator (4) zwischengespeichert wird, und
   b2) an dem Energieanschluss (16) in die Elektronikeinheit (2) eingespeist wird,

   c) der elektrische Versorgungsstrom erfasst wird, und
   d) aus dem erfassten elektrischen Versorgungsstrom eine aus der Energiespeichereinheit (3) entnommene elektrische Ladungsmenge und eine aktuell in der Energiespeichereinheit (3) noch gespeicherte elektrische Restladungsmenge ermittelt wird.

10. Verfahren nach Anspruch 9, **dadurch gekennzeichnet, dass** der elektrische Versorgungsstrom mittels eines elektrischen Strommesswiderstands (13) erfasst wird.

11. Verfahren nach Anspruch 9 oder 10, **dadurch gekennzeichnet, dass** die in der Energiespeichereinheit (3) noch gespeicherte elektrische Restladungsmenge zyklisch zu diskreten und jeweils ein Mittelungsintervall zeitlich auseinander liegenden Ermittlungszeitpunkten ermittelt wird.

12. Verfahren nach Anspruch 11, **dadurch gekennzeichnet, dass** der elektrische Versorgungsstrom zyklisch zu diskreten und jeweils ein Messintervall zeitlich auseinander liegenden Erfassungszeitpunkten erfasst wird, und insbesondere aus den innerhalb jedes der Mittelungsintervalle erfassten Werten des elektrischen Versorgungsstroms jeweils einen Versorgungsstrommittelwert für das betreffende Mittelungsintervall und daraus die in diesem Mittelungsintervall entnommene elektrische Ladungsmenge bestimmt wird.

13. Verfahren nach Anspruch 12, **dadurch gekennzeichnet, dass** der Versorgungsstrommittelwert für das betreffende Mittelungsintervall jeweils mittels einer linearen Mittelung, einer quadratischen Mittelung oder einer Tiefpass-Mittelung bestimmt wird.

14. Verfahren nach einem der Ansprüche 12 und 13, **dadurch gekennzeichnet, dass** für das Messintervall ein Wert vorgesehen wird, der kleiner als die Hälfte des Produkts der Werte des Pufferkondensators (4) und eines Strommesswiderstands (13) ist.

15. Verfahren nach einem der Ansprüche 9 bis 14, **dadurch gekennzeichnet, dass** eine elektrische Speicher-Versorgungsspannung der Energiespeichereinheit (3) erfasst wird.

Fig.1

EP 4 199 297 A1

Fig. 2

Europäisches
Patentamt

European
Patent Office

Office européen
des brevets

**EUROPÄISCHER RECHERCHENBERICHT**

Nummer der Anmeldung

**EP 21 21 4594**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2012/176098 A1 (GREENING THOMAS CHARLES [US] ET AL) 12. Juli 2012 (2012-07-12) | 1,2,9 | INV. H02J7/00 G01D4/00 G01F1/00 G01R31/3828 |
| A | * Absätze [0002], [0006], [0008], [0056]; Abbildungen 1-3 * | 6,14 | |
| | ----- | | |
| X | DE 10 2018 114660 B3 (TECHEM ENERGY SERVICES GMBH [DE]) 26. September 2019 (2019-09-26) | 1-5, 7-13,15 | |
| Y | * Absätze [0001], [0003], [0010], [0017] – [0021], [0023], [0025], [0028], [0046] – [0048], [0130] * | 8 | |
| A | | 6,14 | |
| | ----- | | |
| Y | EP 2 075 553 B1 (KAMSTRUP AS [DK]) 8. Januar 2014 (2014-01-08) * Absätze [0001], [0002], [0006]; Abbildungen 1,2 * | 8 | |
| | ----- | | |

**RECHERCHIERTE SACHGEBIETE (IPC)**

H02J
G01R
G01D
G01F

Der vorliegende Recherchenbericht wurde für alle Patentansprüche erstellt

| Recherchenort | Abschlußdatum der Recherche | Prüfer |
|---|---|---|
| München | 2. Juni 2022 | Hanisch, Thomas |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 21 4594

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-06-2022

| Im Recherchenbericht angeführtes Patentdokument | Datum der Veröffentlichung | Mitglied(er) der Patentfamilie | Datum der Veröffentlichung |
|---|---|---|---|
| US 2012176098 A1 | 12-07-2012 | CN 101946222 A | 12-01-2011 |
| | | EP 2238524 A2 | 13-10-2010 |
| | | EP 3159772 A1 | 26-04-2017 |
| | | KR 20100102220 A | 20-09-2010 |
| | | US 2009208824 A1 | 20-08-2009 |
| | | US 2012176098 A1 | 12-07-2012 |
| | | WO 2009102552 A2 | 20-08-2009 |
| DE 102018114660 B3 | 26-09-2019 | KEINE | |
| EP 2075553 B1 | 08-01-2014 | DK 2075553 T3 | 24-03-2014 |
| | | EP 2075553 A1 | 01-07-2009 |
| | | WO 2010054664 A1 | 20-05-2010 |

Für nähere Einzelheiten zu diesem Anhang : siehe Amtsblatt des Europäischen Patentamts, Nr.12/82

**EP 4 199 297 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3855147 A1